# EUROPEAN PATENT SPECIFICATION

(11) **EP 0 348 932 B1**
(45) Date of publication and mention of the grant of the patent: **10.05.1995**
(21) Application number: 89111756.6
(22) Date of filing: 28.06.1989
(51) Int. Cl.: G07F 7/10

(54) **Card transactions processing apparatus, program board for use with such apparatus and method to use such apparatus or board**
Verarbeitungsvorrichtung für Kartentransaktionen, Programmierkarte zu ihrem Gebrauch und Verfahren zur Anwendung einer solchen Vorrichtung oder Programmierkarte
Dispositif de traitement de transactions à carte de crédit, support de programmation à utiliser avec un tel dispositif et méthode d'emploi d'un tel dispositif ou support

(30) Priority: 28.06.1988 JP 158079/88
(43) Date of publication of application: 03.01.1990
(73) Proprietor: Oki Electric Industry Co., Ltd., Tokyo (JP)
(72) Inventor: Takizawa, Toshio, Minato-ku Tokyo (JP); Hirata, Hiroharu, Minato-ku Tokyo (JP)
(74) Representative: Betten & Resch

(56) References cited:
- EP-A- 0 049 650
- EP-A- 0 177 900
- FR-A- 2 600 444
- FR-A- 2 606 905
- US-A- 4 678 896

## Description

### BACKGROUND OF THE INVENTION

### Field of the Invention

The present invention relates to a card transactions processing apparatus and, more particularly, to a card transactions processing apparatus advantageously applicable to IC cards and magnetic stripe cards for executing various kinds of transactions processing, the program board for use with such apparatus and the method to use such apparatus or board.

### Description of the Prior Art

With the spread of various kinds of credit cards, a card transactions processing apparatus implementing card-based transactions is extensively used. This kind of apparatus is in many cases connected in an on-line configuration to central equipment which collectively supervises transactions data associated with the apparatus.

The card transactions processing apparatus has a card reader/writer for selectively reading data out of an IC card or a magnetic stripe card and writing data in such a card. The processing apparatus also has keys which are accessible for entering a particular kind of transaction such as proceeds, preapproval or comparison, and a particular processing division such as debit (price of purchase being immediately charged to deposite account) or check.

For a transaction using a card, an attendant authorized to operate the processing apparatus loads the card reader/writer with a customer's credit card and then manipulates the keys to enter the kind of transaction and the division of processing. In the case of credit processing, for example, the attendant sequentially enters an installment plan including the number of installments and the amount of each installment on the keys by a predetermined sequence.

In general, credit cards are issued not only in the form of IC cards but also in the form of magnetic stripe cards. A problem with a prior art card transactions processing apparatus is that, if the apparatus is designed for use with IC cards, it cannot settle transactions associated with magnetic stripe cards. Specifically, a magnetic stripe card cannot be dealt with unless an exclusive card processing apparatus for such a card is kept at hand in addition to the processing apparatus which is operable with IC cards.

Furthermore, with the prior art processing apparatus, it is necessary to store processing programs and data each being associated with a different card issuing firm in data storing areas of IC cards. This critically limits the freely usable area available in an IC card. More specifically, the prior art processing apparatus cannot meet the increasing demand for standardization which would allow an IC card to be used not only for particular transaction processing associated with a particular party but also for other various purposes.

In EP-A-0 049 650 there is described a card transactions processing apparatus for executing, when a card storing data is mounted on said apparatus, predetermined processing by using card data being stored in said card.

In EP-A-0 177 900 there is described a card identification system which easily and reliably can perform identification of a card having a magnetic recording medium and/or an IC memory.

In EP-A-0 152 024 there is described a portable data storing/processing device for a card transactions apparatus which receives card data stored in a card and executes transactions.

In US-A-4 709 137 there is described a card transactions processing system comprising an IC card and a terminal for communicating with the IC card. The terminal includes means to indicate that a transaction requested by the customer is impossible when no corresponding program for such transactions processing procedures is stored in the IC card.

The problem with the prior art is that a given card transactions processing apparatus or system can only handle one type of card and that it is expensive and time-consuming to change the internal transaction programs.

### SUMMARY OF THE INVENTION

It is therefore an object of the present invention to provide an apparatus and a method for processing transactions using a card transactions processing apparatus which allow an easy change in the transaction programs provided by the card distributor and allow the access of cards from various distributors.

It is a further object of the present invention to provide a card transactions processing apparatus which, even with an IC card that does not store a credit transaction or similar transaction program or data, can execute such transaction processing and is operable even with a magnetic stripe card.

The apparatus according to the invention is described in claim 1. Further embodiments are disclosed in claims 2 to 9.

The method for processing financial transactions using a card transactions processing apparatus according to the invention is defined in claims 10 to 16.

In accordance with the present invention, a card transactions processing apparatus has a card reader/writer for reading and writing data in a card, and a program board storing a transaction program and data particular to a card issuing firm. It is not necessary, therefore, to load the data storing area of each IC card with such a processing program and data. When a transaction processing request associated with a card occurs, processing is executed on the basis of the transaction program and data being stored in the program board. A change in processing program is readily coped with by the replacement of the program board.

### BRIEF DESCRIPTION OF THE DRAWINGS

The objects and features of the present invention will become more apparent from the consideration of the following detailed description taken in conjunction with the accompanying drawings in which:
FIG. 1 is a schematic block diagram showing a card transactions processing apparatus embodying the present invention;
FIG. 2 is an perspective view showing specific appearance of the processing apparatus shown in FIG. 1;
FIG. 3 is a plan view of a keyboard included in the processing apparatus of FIG. 2, showing a specific arrangement of keys on the keyboard;
FIG. 4 is perspective view showing specific appearance of a board mounting section which is defined in a bottom portion of the processing apparatus shown in FIG. 2;
FIG. 5 is a perspective view showing a specific construction of a program board applicable to the arrangement of FIG. 1;
FIG. 6 schematically shows memories which are installed in the program board of FIG. 5;
FIG. 7 is a flowchart demonstrating access processing associated with the program board;
FIG. 8 is a memory map representative of a specific memory arrangement of the program board shown in FIG. 5;
FIG. 9 indicates a specific format of an answer-to-reset signal; and
FIGS. 10A, 10B and 10C are flowcharts demonstrating specific operations of the processing apparatus shown in FIG. 1.

### DESCRIPTION OF THE PREFERRED EMBODIMENT

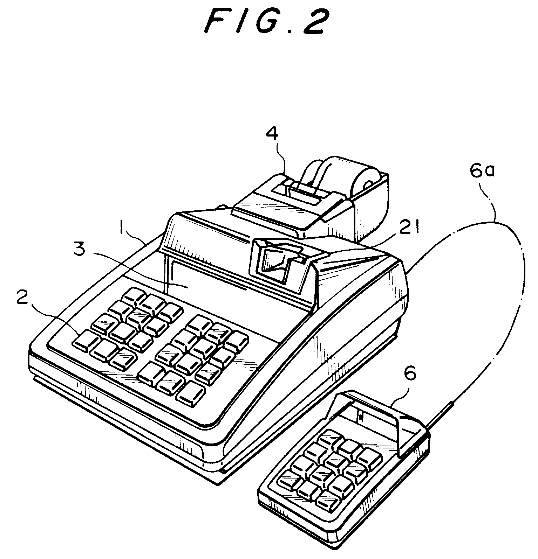

Referring to FIG. 2 of the drawings, a card transactions processing apparatus embodying the present invention is shown and generally designated by the reference numeral 1. As shown, the apparatus 1 is generally made up of a keyboard 2, a display 3, a printer 4, a card reader/writer 21, and a pin pad 6. A program board, not shown, may be removably connected to the apparatus 1, as described in detail later.

The keyboard 2 is mounted on the upper surface of a front part of the processing apparatus 1 and has a plurality of keys arranged thereon. Advantageously implemented by a liquid crystal display, for example, the display 3 shows operation guides for the manipulations of the apparatus and data entered on the keyboard 2, as needed. The printer 4 may be implemented as a thermal printer, for example, and is operable to print transaction data in the form of a slip or similar recording. The card reader/writer 21 reads data or writes data in an IC card, magnetic stripe card or similar card usable with the apparatus 1. The pin pad 6 serves as an operation unit for entering various kinds of data such as a code to be assigned to an individual. The pin pad 6 is operatively connected to the apparatus 1 by a cable 6a.

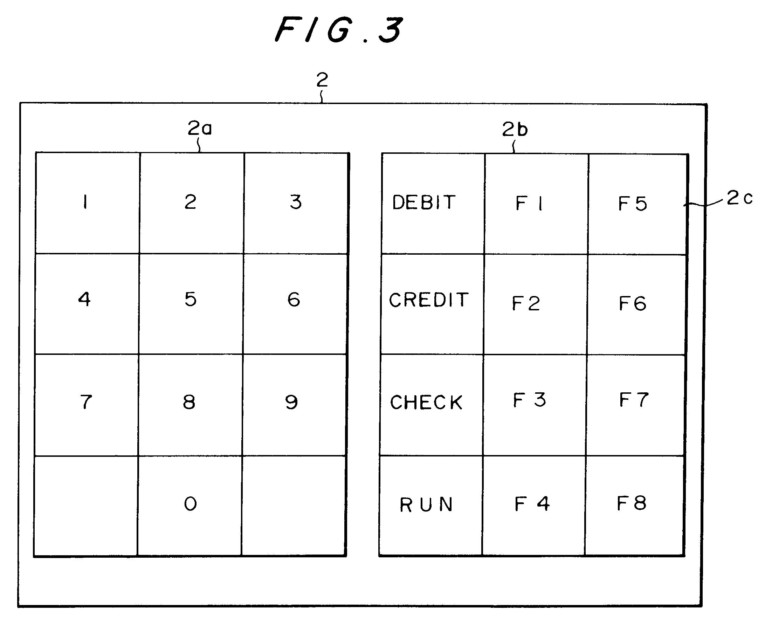

FIG. 3 illustrates a specific arrangement of keys on the keyboard 2 of the card transactions processing apparatus 1. The keyboard 2 is shown as comprising a numeral key section 2a having so-called ten keys, and a command key section 2b which are accessible for entering various kinds of commands. An attendant authorized to operate the apparatus 1 is capable of entering any desired data and select a particular kind of transaction, a particular division of processing and so forth on the keyboard 2.

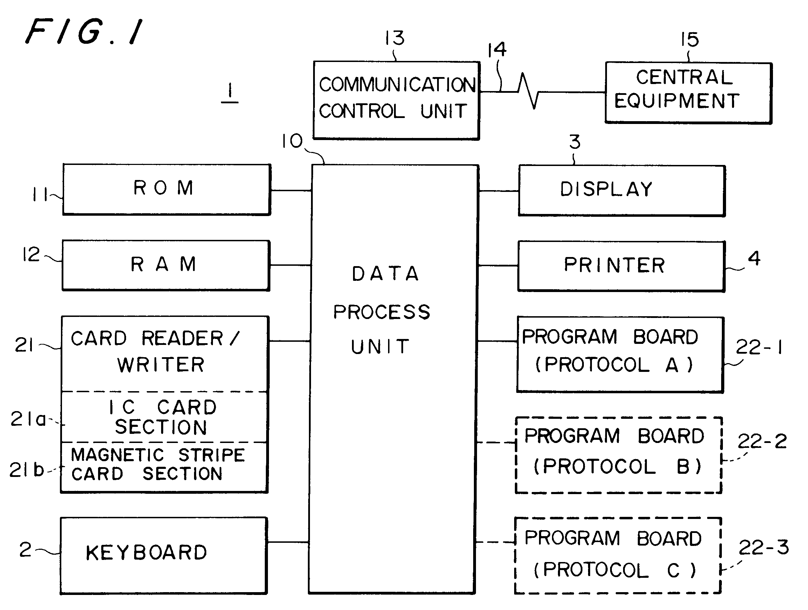

Referring to FIG. 1, the card transactions processing apparatus 1 is schematically shown in a block diagram. As shown, the apparatus 1 has a data processing unit 10 for controlling various kinds of transactions processing which are available with the apparatus 1. Connected to the data processing unit 10 are a read only memory (ROM) 11, a random access memory (RAM) 12, a communication control unit 13, and a program board 22 as well as the keyboard 2, display 3, printer 4, and card reader/writer 21. The communication control unit 13 is connected to a central station or equipment 15 by a communication line 14.

The data processing unit 10 plays the role of a control circuit fur supervising the operations of the entire processing apparatus 1. The ROM 11 is a storage which is loaded with programs and data for executing many kinds of transactions processing. The RAM 12 is a temporary storage in which transactions data or similar data may be stored for a moment. The communication control unit, communication control circuit, 13 controls the interchange of data between the processing apparatus 1 and the central equipment 15.

As shown in FIG. 1, the card reader/writer 21 is constituted by an IC card section 21a and a magnetic stripe card section 21b. The IC card section 21a and the magnetic stripe card section 21b write data in and read data out of an IC card and a magnetic stripe card, respectively. Specifically, the IC card section 21a is implemented as a circuit capable of making contact with a terminal of an IC card to thereby read and write data in the IC card via the terminal. The magnetic stripe card section 21b is configured as a circuit having a magnetic head which senses magnetic stripes that are provided on a magnetic card.

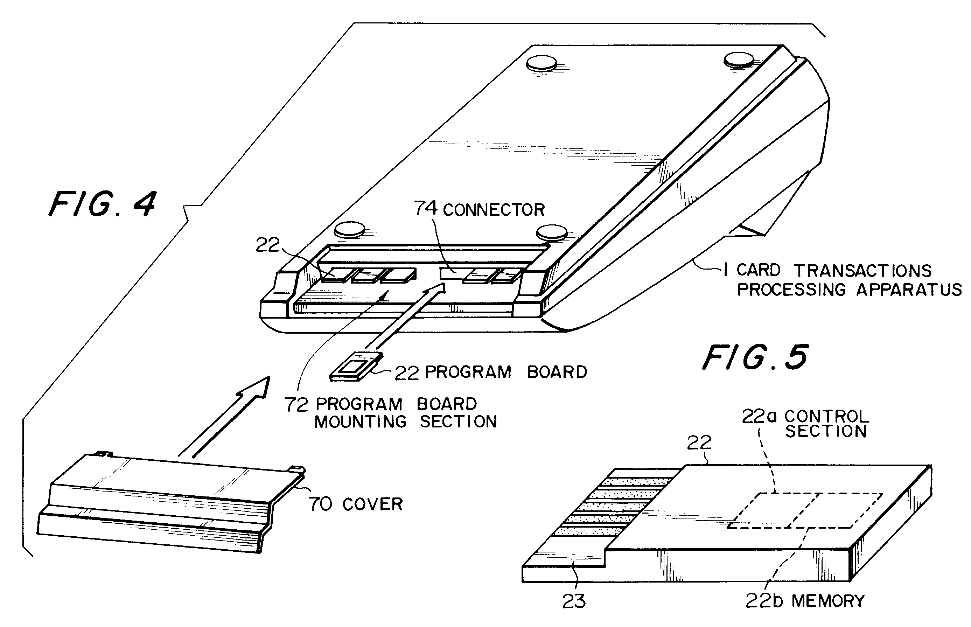

The program board 22 stores processing programs and data which are associated with IC cards and magnetic stripe cards. The program board 22 also stores protocol data representative of transmission and reception for implementing the communication between the processing apparatus 1 and the central equipment 15, the protocol data being unique to a particular firm which issues cards. In the illustrative embodiment, the processing apparatus 1 is adaptive to three different kinds of protocols, i. e., protocols A, B an C particular to card issuing firms A, B and C, respectively. Specifically, the program board 22 is implemented as a program board 22-1 which is assigned to a protocol A, and extra program boards 22-2 and 22-3 which are assigned to protocols B and C, respectively. The data processing unit 10 is provided with a plurality of connectors 74 (FIG. 4) so that the apparatus 1 is operable with extra program boards 22 such as the program boards 22-2 and 22-3, as needed.

FIG. 4 is a perspective view of the card transactions processing apparatus 1 positioned upside down and indicates how the program board 22 may be mounted on the apparatus 1. In the illustrative embodiment, the processing apparatus 1 has on its bottom a program board mounting section 72 which is configured to accommodate extra program boards 22 or to facilitate replacement of program boards 22. As shown, the program board mounting section 72 is located in a bottom front part of the processing apparatus 1 and is usually protected by a cover 70 against impurities. To connect an extra program board 22 or to replace a program board 22 with another, one turns over the processing apparatus 1 and then removes the cover 70 from the bottom of the apparatus 1. In this condition, the program board mounting section 72 is uncovered and, therefore, readily accessible for inserting a program board 22 in an unoccupied predetermined connector 74. While six connectors 74 are shown in FIG. 4, the processing apparatus 1 may of course be provided with more than six or less than six such connectors, as desired.

Referring to FIG. 5, the program board 22 has a connector 23 formed at one end thereof. The connector 23 is provided with a plurality of terminals thereon and has thereinside a control section 22a and a memory 22b. Having a male configuration, the connector 22a is capable of mating with any of the connectors 74 (FIG. 4) of the board mounting section 72 which are electrically connected to the data processing unit 10 (FIG. 1).

The control section 22a controls the interchange of data which the program board 22 may perform with the data processing unit 10 on the basis of a transactions program and data being stored in the memory 22b. The control adopts a procedure which insures security as with an ordinary IC card. For example, the memory 22b of the program board 22 may be loaded with a memory lock and a file lock or file locks, while the data processing unit 10 may be provided with keys each being associated with respective one of the memory lock and file locks. With this lock-and-key scheme, the data processing section 10 is allowed to access the memory 22b by using the keys, as described in detail later. Stated another way, the data processing section 10 cannot reference data stored in the memory 22b unless it is provided with such keys.

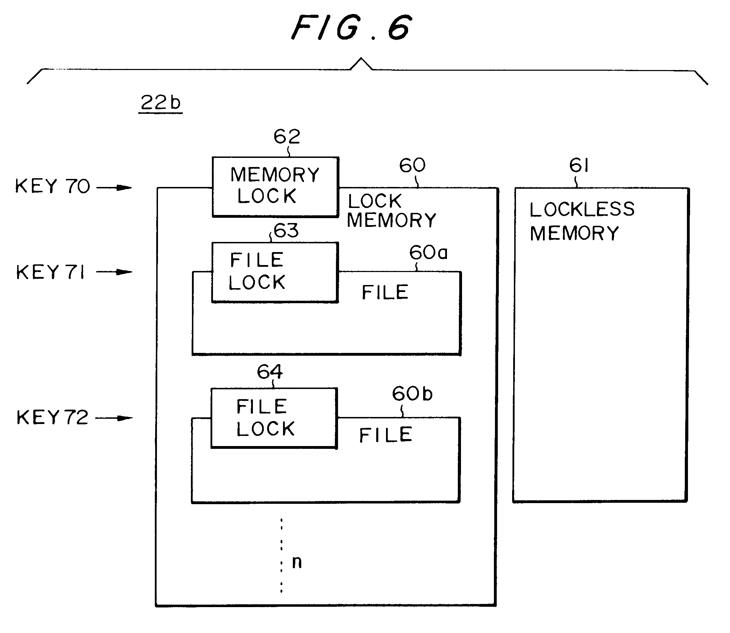

FIG. 6 schematically shows a specific construction of the memory 22b which is incorporated in the program board 22. As shown, the memory 22b is composed of a memory 60 with a lock and a memory 61 without a lock. The memory or lock memory 60 has a memory lock 62 for governing the access to the entire memory 60 and may be opened by an exclusive key 70. A plurality of files, η files, may be defined in the lock memory 60 as represented by two files 60a and 60b in the figure. The files 60a and 60b are provided with file locks 63 and 64, respectively, and may be opened by exclusive keys 71 and 72, respectively. This is true with all the other files which may be defined in the lock memory 60. Each of the memory lock 62 and file locks 63 and 64 can be opened only when the key, or a kind of password, 70, 71 or 72 applied thereto is coincident with the lock.

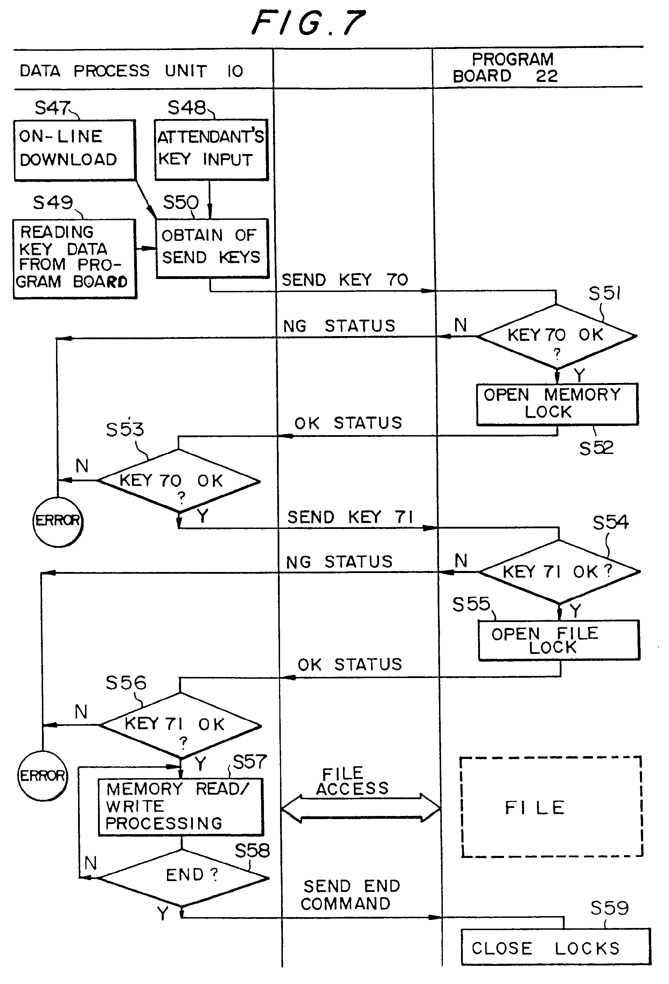

To access the file 60a, for example, the memory lock 62 is opened by using the key 70, and then the file lock 63 associated with the file 60a is opened by using the key 71. A reference will be made to FIG. 7 for describing a specific procedure for accessing the program board 22.

Assume that the data processing unit 10 installed in the processing apparatus 1 accesses the program board 60a by way of example. To access the memory 22b of the program board 22, the data processing unit 10 needs the keys 70 and 71 for opening the memory lock 62 and the file lock 63, respectively, as stated earlier. As shown in FIG. 7, the keys 70 and 71 may be implemented by any of three different schemes: obtaining key data from the central equipment 15 (FIG. 1) (on-line download S47), using data entered on the keyboard 2 (FIG. 1) by the operator as key data (operator's key input S48), and loading the memory or lockless memory 61 with key data beforehand so that it may be read out at need (reading key data from program board S49). The data processing section 10 obtained the key data transmits the key data to the program board 22.

In detail, the data processing unit 10 sends, among the key data, the key 70 to the program board 22 first (step S50). In response, the program board 22 determines whether or not the key 70 is right (S51). If the answer of the step S51 is YES, the program board 22 opens the memory lock 62 (S52) and returns an OK status to the data processing unit 10. Then, the program advances to a step S53. If the answer of the step S51 is NO, the program board 22 sends an NG status to the data processing unit 10, determining that an error has occurred. In the step S53, the data processing unit 10 determines whether or not the key 70 has been correctly processed by the program board 22. If the result of decision in the step S53 is YES, the data processing section 10 transmits the key 71 to the program board 22. This is followed by a step S54. If the result is NO, the data processing unit 10 determines that an error has occurred.

In the step S54, the program board 22 determines whether or not the key 71 is right. If the answer of the step S54 is YES, the program board 22 opens the file key 63 (S55) and sends an OK status to the data processing unit 10. If the answer is NO, the program board 22 sends an NG status to the data processing unit 10, determining that an error has occurred. The step S55 is followed by a step S56 in which the data processing unit 10 sees if the processing associated with the key 71 has been executed correctly. If it has been executed correctly, the data processing unit 10 accesses the file 60a of the memory 22b, i. e., it executes memory read/write processing (S57). Subsequently, the program advances to a step S58.

In the step S58, the data processing unit 10 determines whether or not the file access has ended. If the result of the step S58 is NO, the program returns to the step S57. If it is YES, the data processing section 10 sends an end command to the program board 22. The step S58 is followed by a step S59 for closing the memory lock 62 and file lock 63 of the program board 22. This ends the processing and inhibits further access to the memory 22b.

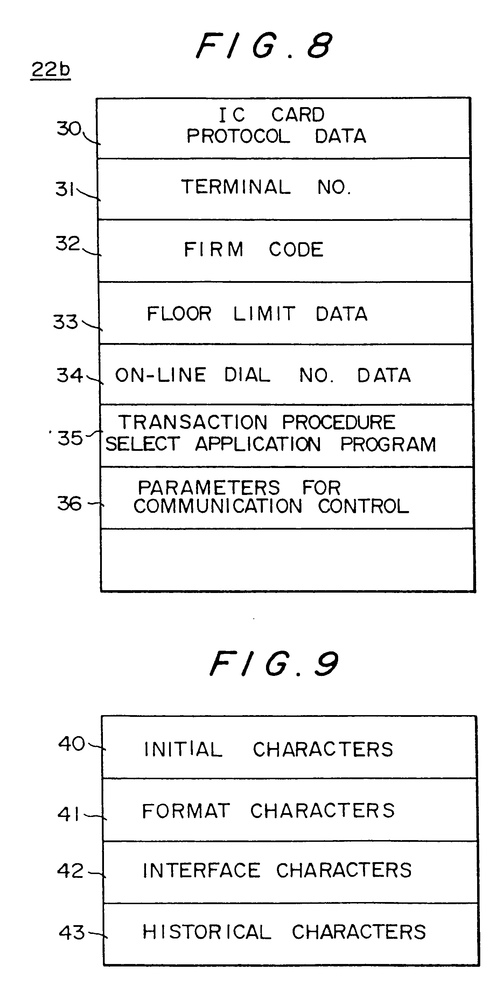

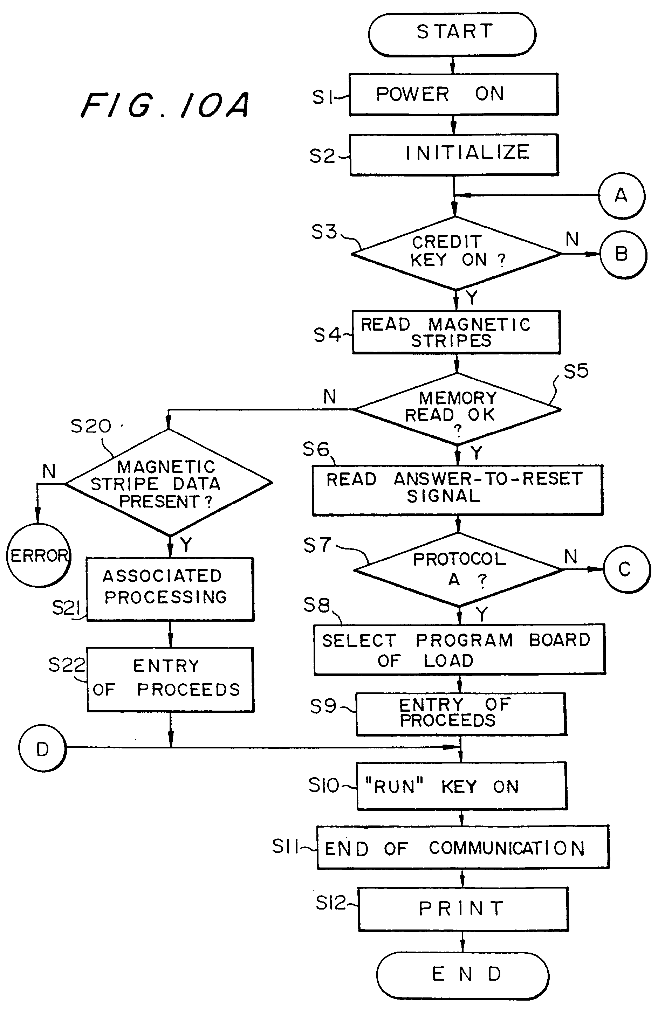

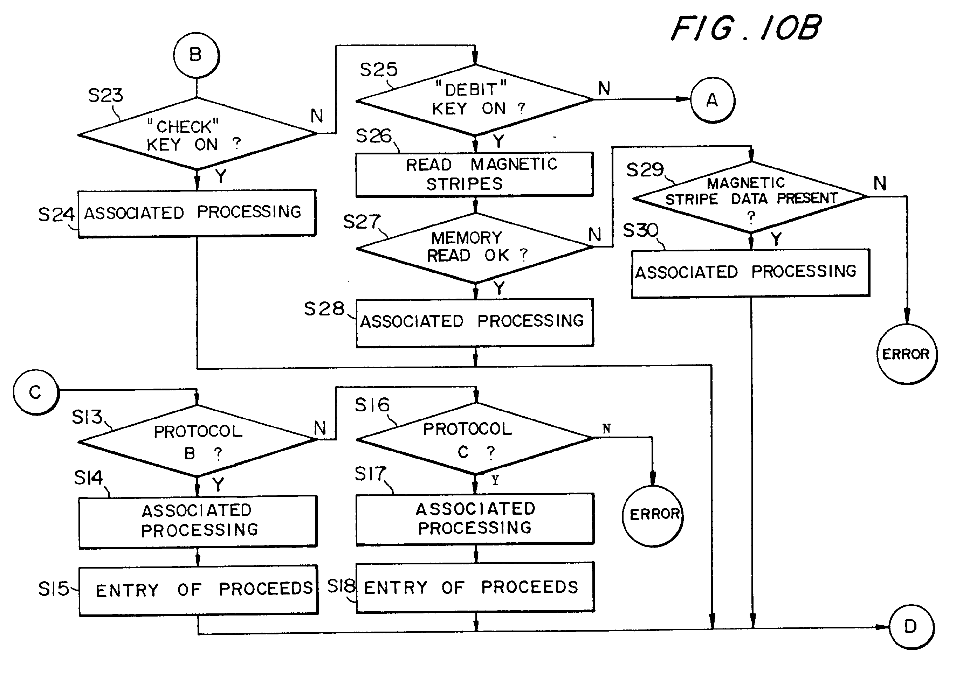

FIG. 8 shows a memory map representative of a specific construction of the memory 22b which is installed in the program board as shown in FIG. 5. As shown, the memory 22b stores IC card protocol data 30, a terminal number 31, a firm code 32, floor limit data 33, on-line dial number data 34, application programs 35 for the selection of transactions procedures, parameters 36 for communication control, etc. The IC card protocol data 30 is so-called format data representative of the kind of a format in which data are stored in an IC card. The terminal number 31 is an exclusive number assigned to the processing apparatus 1 by a card issuing firm so that the central equipment 15 may identify the processing apparatus or terminal 1 sending data in distinction from the others. The floor limit data is indicative of the upper limit of account available with a card. The on-line dial number data 34 shows a telephone number assigned to the central equipment 15. The application programs 35 are data representative of programs and data for executing various kinds of transactions. The communication control parameters 36 are data representative of various kinds of parameters necessary for the communication of the processing apparatus 1 with the central equipment 15.

FIG. 9 shows a specific format of an answer-to-reset signal which is sent from an IC card to the processing apparatus 1. Specifically, when an IC card is loaded in the card reader/writer 21 (FIG. 1), the data processing unit 10 sends a reset signal to the IC card and, in response, the IC card returns an answer-to-reset signal to the data processing section 10. The answer-to-reset signal is shown as having initial characters 40, format characters 41, interface characters 42, and historical characters as prescribed by ISO/DIS7816-3 ANNEX A, by way of example. The initial characters 40 indicate, in the event of interchange of data of the IC card with the data processing unit 10, which of the most significant bit (MSB) and least significant bit (LSB) heads the others, for example. The format characters 41 show a particular format in which the interface characters 42 are recorded. The interface characters 42, in turn, show the operating clock and operating voltage particular to the IC card. The historical characters 43 are representative of a spare item which is available for indicating extra data unique to the IC card, if any.

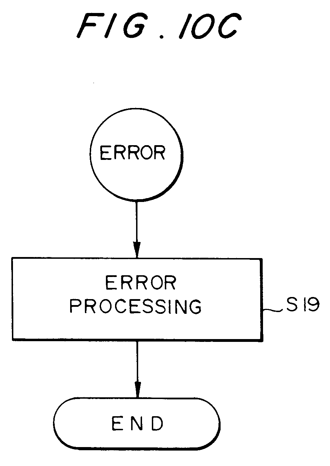

Specific operations of the card transactions processing apparatus 1 having the construction shown in FIG. 1 will be described with reference also made to FIGS. 10A, 10B and 10C, and by taking a credit transaction which is performed with an IC card having magnetic stripes thereon as an example.

The operations begin with a step S1 for turning on the power supply of the processing apparatus 1. Then, the processing apparatus 1 is initialized (S2) by the following procedure. An authorized attendant loads the card reader/writer 21 with an exclusive card for initialization to cause it to read data stored in the card. Subsequently, the attendant enters on the keyboard 2 a predetermined code number which in principle is a number coincident with the terminal number 31 (FIG. 8). In response, the data processing unit 10 compares a number included in the initializing card data and read out by the card reader/writer 21 and the code number entered on the keyboard 2 and, if they are not coincident, the unit 10 inhibits the processing apparatus 1 from being operated. If the two numbers are coincident, the data processing unit 10 compares the code number entered on the keyboard 2 with the terminal number 31. If the two numbers compare equal, the data processing unit 10 executes the next step S3 while, if they do not compare equal, it inhibits the operation of the processing apparatus 1. By such a unique sequence of steps, persons other than the authorized attendant are inhibited from using the processing apparatus 1.

In the step S3, the data processing unit 10 determines whether or not the attendant has pressed a key "CREDIT" (FIG. 3) for performing a credit transaction. If the result of the step S3 is YES, the program advances to a step S4. When the attendant inserts an IC card in the card reader/writer 21, the data processing unit 10 reads magnetic stripes provided on the IC card via the card reader/writer 21 while writing the content in the RAM 12 (S4). This stripe reading step is executed mechanically, whether or not magnetic stripes are present on the IC card. When the IC card is loaded on the card reader/writer 21, data stored in the card are read out via the connecting terminal of the card. Then, whether or not the data read-out from the IC card has been completed is determined (S5). If the result of the S5 is YES, the program advances to a step S6 for reading data represented by an answer-to-reset signal which is fed back from the IC card. The data processing unit 10 checks the IC card mounted on the card reader/writer 21 to see if it is the protocol A of the program board 22-1 that is needed for the credit transaction processing (S7).

If the protocol A of the program board 22-1 is the necessary protocol as decided in the step S7, the data processing unit 10 selects the program board 22-1 and then loads the RAM 12 with the program particular to the program board 22-1 (S8). The processing apparatus 1 having executed the step S8 is ready to enter into an actual transaction processing.

To select a particular program board 22, the data processing unit 10 references data which are representative of the correspondence of protocols and positions on the processing apparatus 1 where program board 22 are mounted and are stored in the RAM 12 beforehand. Specifically, when a program board 22 is mounted on the processing apparatus 1, a function key 2c (FIG. 3) provided on the keyboard 2 is pressed and, thereafter, the numeral keys 2a are manipulated to enter a number representative of the mounting position of the program board 22 and a number representative of a protocol associated with the program board 22. In response to the operation of the function key 2c, the data processing unit 10 generates data which shows the correspondence of the protocol and the mounting position of the program board 22, the data being written in the RAM 12. The data processing unit 10 searches for the mounting position of a program board 22 associated with the determined protocol, and it delivers a program load command to that program board 22. Another possible approach for selecting a program board associated with a particular protocol is to load each program board 22 with data representative of a protocol. In this case, the data processing unit 10 will find the particular program board 22 by reading such data out of the program board 22.

The attendant manipulates the keyboard 2 to enter the proceeds from the transaction (S9) and then presses a key "RUN" (FIG. 3) (S10). In response, the data processing unit 10 performs a predetermined editing operation on the basis of the data read out of the IC card (e. g. member's number, valid term, firm code, etc. ) and the data entered on the keyboard 2. Then, the data processing unit 10 controls the communication control unit 13 to transmit a telegraphic message to the central equipment 15 over the communication line 14. The central equipment 15 in turn executes predetermined processing with the received message and then transmits data inclusive of a result of decision as to the acceptability of the transaction to the processing apparatus 1 over the communication line 14. The communication between the terminal 1 and the center 15 ends when the former receives the message from the latter via the communication control unit 13 (S11). The data processing unit 10 drives the printer 4 on the basis of the message received from the central equipment 15, thereby printing out the proceeds data (S12). This completes the transaction using the IC card, or credit card, and ends the program.

If the result of the decision in the step S7 is NO, the data processing unit 10 executes a step S13 for determining whether or not the protocol B of the program board 22-2 is the necessary protocol for the transaction. If the answer of the step S13 is YES, a step S14 is executed to effect the same processing as the step S8 with the protocol B. Then, the proceeds is entered as in the step S9 (S15). Subsequently, the operation is transferred to the step S10.

If the answer of the step S13 is NO, the data processing unit 10 determines whether or not the protocol C of the program board 22-3 is needed for the transaction (S16). If the result of decision in the step S16 is YES, the same processing as in the step S9 is executed with the protocol C (S17), the proceeds is entered as in the step S9 (S18), and the program advances to the step S10. If the answer of the step S16 is NO, the program executes a step S19 by determining that an error has occurred. This error shows, for example, that a particular protocol for holding a communication with the central equipment 15 cannot be determined. In the step S19, the data processing unit 10 executes error processing for restoring the processing apparatus 1 to its initial conditions, thereby ending the operation.

If the answer of the previously stated step S5 is NO, the data processing unit 10 runs a step S20. Specifically, the data processing unit 10 checks the RAM 12 to see if data representative of magnetic stripes of the IC card exist therein. If the answer is NO, meaning that no such data is present in the RAM 12, the program advances to the error processing step S19 and then ends the operation. This error shows that data essential for the transaction is not obtainable from the IC card. If the result of decision in the step S20 is YES, the data processing unit 10 effects a step S21 for selecting a program board and loading the RAM 12 with a program being stored in the program board, as in the step S8. On the entry of the proceeds (S22), the program advances to the step S10.

If the result of the decision in the step S3 is NO, the data processing unit 10 executes a step S23 to see if a key "CHECK" (FIG. 3) on the keyboard 2 has been pressed. If the answer is YES, processing associated with a check is executed (S24) and followed by the step S10. If the answer of the step S23 is NO, a step S25 is executed to determine whether or not a key "DEBIT" (FIG. 3) on the keyboard 2 has been pressed. If the answer is YES, the data processing unit 10 effects a step S26 which is essentially similar to the step S4 and then executes a step S27 which is essentially similar to the step S5. If the answer of the step S27 is YES, processing associated with a debit is executed (S28) and followed by the step S10 while, if it is NO, a step S29 which is essentially similar to the step S20 is executed. If the answer of the step S29 is YES, the program advances to a step S30 and then to the step S10. If the answer of the step S29 is NO, the data processing unit 20 executes the error processing step S19. This error, like the error described in relation to the step S20, shows that card data indispensable for the transaction is not obtainable. In the step S19, the data processing unit 10 runs the error processing and then ends the operation.

It is to be noted that the steps S4 and S26 for reading magnetic stripes on a card is effected mechanically with no regard to the presence/absence of such stripes, and the RAM 12 (Fig. 1) is loaded with predetermined data only if magnetic stripes are present.

As shown and described, the card transactions processing apparatus 1 executes transaction processing associated with an IC card, on the basis of a transaction program and data stored in the program board 22. The program board 22 may be removed from the processing apparatus 1 so as to inhibit the processing with cards which are associated with the program board 22.

While the illustrative embodiment has been shown and described in relation to an IC card having magnetic stripes thereon, the present invention is of course practicable with an IC card without magnetic stripes and a magnetic stripe card. The items of transactions available with the present invention are not limited to the credit, debit and check to which the illustrative embodiment pertain, and they may additionally include bonus settlement, installment plan, revolving, etc. This can be done simply by modifying the program boards 22 or using alternative program boards.

The control section 22a and memory 22b of the program board 22 may be implemented as a one-chip configuration of silicon, for example, in place of the independent arrangement shown in FIG. 5. Furthermore, the memory 22b may be constituted by an EEPROM (Electrically Erasable Programmable Read Only Memory) so as to allow the transactions programs and data to be changed without resorting to the replacement of the program board 22.

In summary, it will be seen that the present invention provides a card transactions processing apparatus in which a particular transaction processing program and data necessary for a transaction are specified by a program which is transferred from a program board to a RAM, eliminating the need for various kinds of transactions procedures otherwise stored in ROMs, RAMs and IC cards. Therefore, ROMs and RAMs each having a small capacity suffice many kinds of transactions, cutting down the memory cost and thereby the cost of the card transactions processing apparatus as a whole. The apparatus of the invention can readily adapt itself to the diversification of the kinds of IC cards and magnetic stripe cards, only if it is furnished with additional program boards or if the program boards are modified. In addition, the program boards are simply mated with a data processing section of the apparatus by connectors and, therefore, they are easy to mount and dismount.

While the present invention has been described with reference to the particular illustrative embodiment, it is not to be restricted by the embodiment but only by the appended claims.

## Claims

1. A card transactions processing apparatus which receives card data stored in a card and which includes a RAM and at least one exchangeable program board and executes transactions,
said program board (22) comprising:
storing means (22b) for storing a transaction program and data, said storing means (22b) including a first memory section with a memory lock which allows access to the first memory section by a predetermined memory key, and a file lock which allows access to a file included in the first memory section by a predetermined file key, said storing means (22b) additionally including a second memory section without a lock, access being allowed to the second memory section without a key;
connection means (23) for detachably connecting said storing means (22b) to said card transactions processing apparatus (1); and
control means (22a), interconnected to said storing means (22b), for controlling transfer of data between said storing means (22b) and said card transactions processing apparatus in response to the transaction program stored in said storing means (22b) if access has been allowed to the first memory section by the memory key and to the file by the file key;
said card transactions processing apparatus further comprising:
a card reader/writer (21) comprising means for reading and writing data in an integrated circuit card, and means for reading magnetic stripes which are provided on a magnetic card;
data processing means (10) for exectuing predetermined processing on the basis of the card data and information read from said storing means (22b) of said program board (22);
program board mounting means (72) for detachably receiving said connecting means (23) of one and at least one further of said program board (22);
means for determining whether a program board (22) corresponding to the data read from the integrated circuit card is present in the card transactions processing apparatus;
means for transferring said transaction program stored in the program board to the RAM of the card transactions processing apparatus, if a program board (22) corresponding to the data read from the integrated circuit card is present;
means for processing a financial transaction on the basis of the card data and information read from said storing means (22b) of said programm board; and
means for executing error processing if a program board corresponding to the data read from the integrated circuit card is not determined to be present in the card transactions processing apparatus.

2. A card transactions processing apparatus (1) in accordance with claim 1 , CHARACTERIZED IN THAT said storing means (22b) stores:
card protocol data (30) representaive of a format in which data are stored in the card;
a terminal number (31) for identifying said card transactions processing apparatus (1);
a firm code (32) repersentative of a firm that issued the card;
floor limit data (33) representative of an upper limit available with the card;
on-line dial number data (34) representative of an access number for connecting said card transactions processing apparatus (1) to a central equipment (15);
a transaction procedure selecting application program (35) which includes a program and data for executing transaction processing; and
communication control parameters (36) which are necessary for said card transactions processing apparatus (1) to commuinicate with said central equipment (15).

3. A card transactions processing apparatus in accordance with claim 1 , CHARACTERIZED IN THAT said data processing means (10) further comprises means for selecting one of said program board and said at least one further program board after the card data has been read by said card reader/writer (21), and for executing transaction processing on the basis of a transaction program or data being stored in said selected program board.

4. A card transactions processing apparatus in accordance with claim 1 , CHARACTERIZED IN THAT when an integrated circuit card is read by said card reader/writer (21), said data processing means (10) sends a reset signal to the card and the card responds by returing an answer-to-reset signal to said data processing means (10), and the answer-to-reset signal includes:
first characters (40) identifying the most significant bit and the least significant bit;
second characters (42) representative of an operating clock and an operating voltage of the card; and
third characters (41) representative of a format in which the second characters (42) are recorded.

5. A card transactions processing apparatus in accordance with claim 1, CHARACTERIZED IN THAT the memory key and the file key are stored in said second memory section and transferred to said card transactions processing apparatus (1).

6. A card transactions processing apparatus in accordance with claim 1 , CHARACTERIZED IN THAT said card transactions processing apparatus (1) further comprises key-receiving means comprising a keyboard (2) and a communication control unit, and connected to said data processing means (10), for receiving the memory key and the file key, the key being manually entered via said keyboard (2), and the keys being received from said central equipment (15) via said communication control unit (13).

7. A card transactions processing apparatus in accordance with claim 1 , CHARACTERIZED IN THAT said data processing means (10) further comprises means for transferring the memory key to said program board (22) via said connecting means (23), and said control means (22a) of said program board(22) further comprises means for determining whether the memory key transferred to said program board (22) is correct, for allowing access to said first memory section of said program board (22) if the memory key transferred to said program board (22) is correct, and for signaling said data processing means (10) of said card transactions processing apparatus (1), via said connecting means (23), whether the memory key transferred to said program board (22) is correct.

8. A card transactions processing apparatus in accordance with claim 1 , CHARACTERIZED IN THAT said data processing means (10) further comprises means for transferring the file key to said program board (22) via said connecting means if the memory key transferred to said program board (22) is correct, and said control means (22a) of said program board (22) further comprises means for determining whether the file key transferred to said program board (22) is correct, for allowing access to the file if the file key transferred to said program board (22) is correct, and for signaling said data processing means (10) of said card transactions processing apparatus (1), via said connecting means (23), whether the file key transferred to said program board (22) is correct.

9. A card transactions processing apparatus in accordance with claim 1, CHARACTERIZED IN THAT said card transactions processing apparatus (1) further comprises a memory into which the file is read, via said connecting means (23), if the file key transferred to said program board (22) is correct.

10. A method for processing financial transactions using a card transactions processing apparatus which receives cards storing information and which includes a RAM and at least one exchangeable program board,
the method comprising the steps of:
(a) turning the card transactions processing apparatus on;
(b) initializing the card transactions processing apparatus by performing at least one predetermined initialization operating on the card transactions processing apparatus, operation of the card transactions processing apparatus being inhibited unless the at least one predetermined initialization operation is performed;
(c) inserting a customer card in the card transactions processing apparatus after step (b);
(d) reading information from the customer card, the information read from the customer card including a protocol for communicating with central equipment disposed at a remote location;
(e) determining whether a program board corresponding to the protocol read in step (d) is present in the card transactions processing apparatus;
(f) if a program board corresponding to the protocol read in step (d) is determined to be present in the card transactions processing apparatus, transferring a program stored in the respective program board thereof to the RAM of the card transactions processing apparatus;
(g) processing a financial transaction, step (g) including executing the program transferred in step (f) and transmitting information between the card transactions processing apparatus and the central equipment; and
(h) executing error processing if a program board corresponding to the protocol read in step (d) is not determined to be present in the card transactions processing apparatus.

11. The method of claim 10, CHARACTERIZED IN THAT wherein the program transferred in step (f) is stored in one of a plurality of files in the respective program board, wherein the respective program board additionally stores a memory lock key and a file lock key, and wherein step (f) comprises the steps of:
transferring a purported memory key to the respective program board;
at the respective program board, comparing the purported memory key to the memory key stored in the respective program board;
inhibiting the card transactions processing apparatus from accessing any of said plurality of files in the respective program board if the purported memory key does not match the memory key stored in the program board;
emitting an OK status signal from the respective program board if the purported memory key matches the memory key stored in the respective program board;
if the OK status signal is emitted, transferring a purported file key to the respective program board;
at the respective program board, comparing the purported file key to the file key stored in the respective program board; and
inhibiting the card transactions processing apparatus from accessing the predetermined one of a plurality of files if the purported file key does not match the file key.

12. The method of claim 10, CHARACTERIZED IN THAT wherein the at least one predetermined initialization operation performed in step (b) includes the steps of inserting an authorization card in the card transactions processing apparatus and additionally entering a predetermined code via a keyboard thereof.

13. The method of claim 10, CHARACTERIZED IN THAT the method further comprises the step of actuating the keyboard to select a credit transaction or a debit transaction before step (d) is conducted.

14. The method of claim 10, CHARACTERIZED IN THAT step (d) comprises reading at least one magnetic stripe from an integrated circuit card and further conveying an answer-to-reset signal from the customer card to the card transactions processing apparatus after step (d) is conducted.

15. The method of claim 10, CHARACTERIZED IN THAT wherein the at least one program board included in the card transactions processing apparatus includes at least a first program board corresponding to a first protocol and a second program board corresponding to a second protocol, and wherein step (e) comprises determining whether the protocol read in step (d) is the first protocol and, if not, whether it is the second protocol.

16. The method of claim 10, CHARACTERIZED IN THAT wherein at least one further program board, corresponding to at least one further protocol, is included in the card transactions processing apparatus, and wherein step (e) further comprises determining whether the protocol read in step (d) is the at least one further protocol.

## Patentansprüche

1. Karten-Transaktionsbetriebsgerät, das Kartendaten empfängt, die in einer Karte gespeichert sind, und das einen RAM und wenigstens eine austauschbare Programmkarte enthält und Transaktionen ausführt,
wobei die Programmkarte (22) folgendes aufweist:
eine Speichereinrichtung (22b) zum Speichern eines Transaktionsprogramms und von Daten, wobei die Speichereinrichtung (22b) einen ersten Speicherabschnitt enthält mit einer Speicherverriegelung, die einen Zugriff zu dem ersten Speicherabschnitt durch einen vorbestimmten Speicherschlüssel zuläßt, und mit einer Dateiverriegelung, die einen Zugriff auf eine Datei, die in dem ersten Speicherabschnitt enthalten ist, durch einen vorbestimmten Dateischlüssel zuläßt, wobei die Speichereinrichtung (22b) zusätzlich einen zweiten Speicherabschnitt ohne eine Verriegelung enthält, wobei ein Zugriff auf den zweiten Speicherabschnitt ohne einen Schlüssel zugelassen ist;
eine Verbindungseinrichtung (23) zum loslösbaren Verbinden der Speichereinrichtung (22b) mit dem Karten-Transaktionsbetriebsgerät (1); und
eine Steuereinrichtung (22a), die mit der Speichereinrichtung (22b) verbunden ist, zum Steuern einer Übertragung von Daten zwischen der Speichereinrichtung (22b) und dem Karten-Transaktionsbetriebsgerät in Antwort auf das Transaktionsprogramm, das in der Speichereinrichtung (22b) gespeichert ist, wenn ein Zugriff auf den ersten Speicherabschnitt durch den Speicherschlüssel und auf die Datei durch den Dateischlüssel zugelassen worden ist;
wobei das Karten-Transaktionsbetriebsgerät weiterhin folgendes aufweist:
einen Kartenleser/-schreiber (21) mit einer Einrichtung zum Lesen und Schreiben von Daten in einer Karte mit integriertem Schaltkreis und einer Einrichtung zum Lesen von Magnetstreifen, die auf einer Magnetkarte vorgesehen sind;
eine Datenverarbeitungseinrichtung (10) zum Ausführen einer vorbestimmten Verarbeitung auf der Basis der Kartendaten und -information, die aus der Speichereinrichtung (22b) der Programmkarte (22) gelesen werden;
eine Programmkarten-Montiereinrichtung (72) zum loslösbaren Aufnehmen der Verbindungseinrichtung (23) einer und wenigstens einer weiteren der Programmkarten (22);
eine Einrichtung zum Feststellen, ob eine Programmkarte (22) entsprechend der von der Karte mit integriertem Schaltkreis gelesenen Daten in dem Karten-Transaktionsbetriebsgerät vorhanden ist;
eine Einrichtung zum Übertragen des Transaktionsprogramms, das in der Programmkarte gespeichert ist, zu dem RAM des Karten-Transaktionsbetriebsgeräts, wenn eine Programmkarte (22) entsprechend der von der Karte mit integriertem Schaltkreis gelesenen Daten vorhanden ist;
eine Einrichtung zum Verarbeiten einer finanziellen Transaktion auf der Basis der Kartendaten und -information, die von der Speichereinrichtung (22b) der Programmkarte gelesen werden; und
eine Einrichtung zum Ausführen einer Fehlerverarbeitung, wenn festgestellt wird, daß eine Programmkarte entsprechend der von der Karte mit integriertem Schaltkreis gelesenen Daten nicht in dem Karten-Transaktionsbetriebsgerät vorhanden ist.

2. Karten-Transaktionsbetriebsgerät (1) nach Anspruch 1, dadurch gekennzeichnet, daß die Speichereinrichtung (22b) folgendes speichert:
Karten-Protokolldaten (30), die ein Format darstellen, in dem Daten in der Karte gespeichert sind;
eine Anschlußnummer (31) zum Identifizieren des Karten-Transaktionsbetriebsgeräts (1);
einen Firmencode (32), der eine Firma darstellt, die die Karte ausgegeben hat;
Daten zur Begrenzung eines Limits (33), das eine mit der Karte verfügbare obere Grenze darstellt;
On-Line-Durchwahlnummer-Daten (34), die eine Zugriffsnummer zum Verbinden des Karten-Transaktionsbetriebsgeräts (1) mit einem Zentralgerät (15) darstellen;
ein Anwendungsprogramm (35) zur Auswahl eines Transaktionsverfahrens, wobei das Anwendungsprogramm ein Programm und Daten zum Ausführen eines Transaktionsverfahrens enthält; und
Kommunikations-Steuerparameter (36), die für das Karten-Transaktionsbetriebsgerät (1) nötig sind, um mit dem Zentralgerät (15) zu kommunizieren.

3. Karten-Transaktionsbetriebsgerät nach Anspruch 1, dadurch gekennzeichnet, daß die Datenverarbeitungseinrichtung (10) weiterhin folgendes aufweist:
eine Einrichtung zum Auswählen einer der Programmkarten und wenigstens einer weiteren Programmkarte, nachdem die Kartendaten durch den Kartenleser/-schreiber (21) gelesen worden sind, und zum Ausführen einer Transaktionsverarbeitung auf der Basis eines Transaktionsprogramms oder von Daten, die in der ausgewählten Programmkarte gespeichert sind.

4. Karten-Transaktionsbetriebsgerät nach Anspruch 1, dadurch gekennzeichnet, daß dann, wenn eine Karte mit integriertem Schaltkreis durch den Kartenleser/-schreiber (21) gelesen wird, die Datenverarbeitungseinrichtung (10) ein Rücksetz-Signal zu der Karte sendet, und die Karte durch Zurücksenden eines Antwort-auf-Rücksetzung-Signals zu der Datenverarbeitungseinrichtung (10) antwortet, und das Antwort-auf-Rücksetzung-Signal folgendes enthält:
erste Zeichen (40), die das signifikanteste Bit und das am wenigsten signifikante Bit identifizieren;
zweite Zeichen (42), die einen Betriebstakt und eine Betriebsspannung der Karte darstellen; und
dritte Zeichen (41), die ein Format darstellen, in dem die zweiten Zeichen (42) aufgezeichnet sind.

5. Karten-Transaktionsbetriebsgerät nach Anspruch 1, dadurch gekennzeichnet, daß der Speicherschlüssel und der Dateischlüssel in dem zweiten Speicherabschnitt gespeichert sind und zu dem Karten-Transaktionsbetriebsgerät (1) übertragen werden.

6. Karten-Transaktionsbetriebsgerät nach Anspruch 1, dadurch gekennzeichnet, daß das Karten-Transaktionsbetriebsgerät (1) weiterhin eine Schlüssel-Empfangseinrichtung aufweist, die eine Tastatur (2) und eine Kommunikations-Steuereinheit aufweist, und die mit der Datenverarbeitungseinrichtung (10) verbunden ist, zum Empfangen des Speicherschlüssels und des Dateischlüssels, wobei der Schlüssel manuell über die Tastatur (2) eingegeben wird, und wobei die Schlüssel von dem Zentralgerät (15) über die Kommunikations-Steuereinheit (13) empfangen werden.

7. Karten-Transaktionsbetriebsgerät nach Anspruch 1, dadurch gekennzeichnet, daß die Datenverarbeitungseinrichtung (10) weiterhin eine Einrichtung aufweist zum Übertragen des Speicherschlüssels zu der Programmkarte (22) über die Verbindungseinrichtung (23), und wobei die Steuereinrichtung (22a) der Programmkarte (22) weiterhin eine Einrichtung aufweist zum Feststellen, ob der zu der Programmkarte (22) übertragene Speicherschlüssel richtig ist, zum Zulassen eines Zugriffs auf den ersten Speicherabschnitt der Programmkarte (22), wenn der zu der Programmkarte (22) übertragene Speicherschlüssel richtig ist, und zum Signalisieren an die Datenverarbeitungseinrichtung (10) des Karten-Transaktionsbetriebsgeräts (1) über die Verbindungseinrichtung (23), ob der zu der Programmkarte (22) übertragene Speicherschlüssel richtig ist.

8. Karten-Transaktionsbetriebsgerät nach Anspruch 1, dadurch gekennzeichnet, daß die Datenverarbeitungseinrichtung (10) weiterhin eine Einrichtung aufweist zum Übertragen des Dateischlüssels zu der Programmkarte (22) über die Verbindungseinrichtung, wenn der zu der Programmkarte (22) übertragene Speicherschlüssel richtig ist, und die Steuereinrichtung (22a) der Programmkarte (22) weiterhin eine Einrichtung aufweist zum Feststellen, ob der zu der Programmkarte (22) übertragene Dateischlüssel richtig ist, zum Zulassen eines Zugriffs auf die Datei, wenn der zu der Programmkarte (22) übertragene Dateischlüssel richtig ist, und zum Signalisieren an die Datenverarbeitungseinrichtung (10) des Karten-Transaktionsbetriebsgeräts (1) über die Verbindungseinrichtung (23), ob der zu der Programmkarte (22) übertragene Dateischlüssel richtig ist.

9. Karten-Transaktionsbetriebsgerät nach Anspruch 1, dadurch gekennzeichnet, daß das Karten-Transaktionsbetriebsgerät (1) weiterhin einen Speicher aufweist, in den die Datei über die Verbindungseinrichtung (23) gelesen wird, wenn der zu der Programmkarte (22) übertragene Dateischlüssel richtig ist.

10. Verfahren zum Verarbeiten finanzieller Transaktionen unter Verwendung eines Karten-Transaktionsbetriebsgeräts, das Karten empfängt, die Information speichern, und das einen RAM und wenigstens eine austauschbare Programmkarte enthält,
wobei das Verfahren folgende Schritte aufweist:
(a) Einschalten des Karten-Transaktionsbetriebsgeräts;
(b) Initialisieren des Karten-Transaktionsbetriebsgeräts durch Durchführen wenigstens einer vorbestimmten Initialisierung, die an dem Karten-Transaktionsbetriebsgerät arbeitet, wobei eine Operation des Karten-Transaktionsbetriebsgeräts solange verhindert wird, bis die wenigstens eine vorbestimmte Initialisierungsoperation durchgeführt ist;
(c) Einfügen einer Kundenkarte in das Karten-Transaktionsbetriebsgerät nach Schritt (b);
(d) Lesen einer Information von der Kundenkarte, wobei die von der Kundenkarte gelesene Information ein Protokoll zum Kommunizieren mit einem an einem entfernten Ort angeordneten Zentralgerät enthält;
(e) Feststellen, ob eine Programmkarte entsprechend dem im Schritt (d) gelesenen Protokoll in dem Karten-Transaktionsbetriebsgerät vorhanden ist;
(f) wenn festgestellt wird, daß eine Programmkarte entsprechend dem im Schritt (d) gelesenen Protokoll in dem Karten-Transaktionsbetriebsgerät vorhanden ist, Übertragen eines in seiner jeweiligen Programmkarte gespeicherten Programms zu dem RAM des Karten-Transaktionsbetriebsgeräts;
(g) Verarbeiten einer finanziellen Transaktion, wobei der Schritt (g) ein Ausführen des im Schritt (f) übertragenen Programms enthält, und Übertragen einer Information zwischen dem Karten-Transaktionsbetriebsgerät und dem Zentralgerät; und
(h) Ausführen einer Fehlerverarbeitung, wenn festgestellt wird, daß eine Programmkarte entsprechend dem im Schritt (d) gelesenen Protokoll nicht in dem Karten-Transaktionsbetriebsgerät vorhanden ist.

11. Verfahren nach Anspruch 10, dadurch gekennzeichnet, daß das im Schritt (f) übertragene Programm in einer einer Vielzahl von Dateien in der jeweiligen Programmkarte gespeichert wird, wobei die jeweilige Programmkarte zusätzlich einen Speicherverriegelungsschlüssel und einen Dateiverriegelungsschlüssel speichert, und wobei der Schritt (f) folgende Schritte aufweist:
Übertragen eines angenommenen Speicherschlüssels zu der jeweiligen Programmkarte;
an der jeweiligen Programmkarte, Vergleichen des angenommenen Speicherschlüssels mit dem in der jeweiligen Programmkarte gespeicherten Speicherschlüssel;
Abhalten des Karten-Transaktionsbetriebsgeräts von einem Zugreifen auf irgendeine der Vielzahl von Dateien in der jeweiligen Programmkarte, wenn der angenommene Speicherschlüssel nicht mit dem in der Programmkarte gespeicherten Speicherschlüssel übereinstimmt;
Aussenden eines OK-Zustandssignals von der jeweiligen Programmkarte, wenn der angenommene Speicherschlüssel mit dem in der jeweiligen Programmkarte gespeicherten Speicherschlüssel übereinstimmt;
wenn das OK-Zustandssignal ausgesendet wird, Übertragen eines angenommenen Dateischlüssels zu der jeweiligen Programmkarte;
an der jeweiligen Programmkarte Vergleichen des angenommenen Dateischlüssels mit dem in der jeweiligen Programmkarte gespeicherten Dateischlüssel; und
Abhalten des Karten-Transaktionsbetriebsgeräts von einem Zugreifen auf die vorbestimmte einer Vielzahl von Dateien, wenn der angenommene Dateischlüssel nicht mit dem Dateischlüssel übereinstimmt.

12. Verfahren nach Anspruch 10, wobei die wenigstens eine vorbestimmte Initialisierungsoperation im Schritt (b) die Schritte zum Einfügen einer autorisierten Karte in das Karten-Transaktionsbetriebsgerät und ein zusätzliches Eingeben eines vorbestimmten Schlüssels über seine Tastatur enthält.

13. Verfahren nach Anspruch 10, dadurch gekennzeichnet, daß das Verfahren weiterhin den Schritt zum Betätigen der Tastatur aufweist, um eine Kredittransaktion oder eine Schuldtransaktion auszuwählen, bevor Schritt (d) ausgeführt wird.

14. Verfahren nach Anspruch 10, dadurch gekennzeichnet, daß Schritt (d) ein Lesen wenigstens eines Magnetstreifens von einer Karte mit integriertem Schaltkreis aufweist, und weiterhin ein Befördern eines Antwort-auf-Rücksetzung-Signals von der Kundenkarte zu dem Karten-Transaktionsbetriebsgerät, nachdem Schritt (d) ausgeführt ist.

15. Verfahren nach Anspruch 10, dadurch gekennzeichnet, daß die wenigstens eine Programmkarte, die in dem Karten-Transaktionsbetriebsgerät enthalten ist, wenigstens eine erste Programmkarte enthält, die einem ersten Protokoll entspricht, und eine zweite Programmkarte, die einem zweiten Protokoll entspricht, und daß Schritt (e) ein Feststellen umfaßt, ob das im Schritt (d) gelesene Protokoll das erste Protokoll ist, und wenn nicht, ob es das zweite Protokoll ist.

16. Verfahren nach Anspruch 10, dadurch gekennzeichnet, daß wenigstens eine weitere Programmkarte entsprechend wenigstens einem weiteren Protokoll in dem Karten-Transaktionsbetriebsgerät enthalten ist, und daß Schritt (e) weiterhin ein Feststellen aufweist, ob das im Schritt (d) gelesene Protokoll das wenigstens eine weitere Protokoll ist.

## Revendications

1. Un appareil de traitement de transactions par carte qui reçoit des données de carte enregistrées sur une carte et qui comprend une mémoire vive et au moins une cartouche de programme échangeable et qui exécute des transactions,
la cartouche de programme (22) comprenant :
des moyens d'enregistrement (22b) pour enregistrer un programme de transaction et des données, ces moyens d'enregistrement (22b) comprenant une première section de mémoire avec un verrou de mémoire qui permet l'accès à la première section de mémoire au moyen d'une clé de mémoire prédéterminée, et un verrou de fichier qui permet l'accès à un fichier inclus dans la première section de mémoire, au moyen d'une clé de fichier prédéterminée, ces moyens d'enregistrement (22b) comprenant en outre une seconde section de mémoire sans verrou, l'accès à la seconde section de mémoire étant autorisé sans une clé ;
des moyens de connexion (23) pour connecter de façon amovible les moyens d'enregistrement (22b) à l'appareil de traitement de transactions par carte (1) ; et
des moyens de commande (22a), interconnectés aux moyens d'enregistrement (22b), pour commander le transfert de données entre les moyens d'enregistrement (22b) et l'appareil de traitement de transactions par carte, sous la dépendance du programme de transaction qui est enregistré dans les moyens d'enregistrement (22b), si l'accès à la première section de mémoire a été autorisé par la clé de mémoire et l'accès au fichier a été autorisé par la clé de fichier ;
cet appareil de traitement de transactions par carte comprenant en outre :
un lecteur/enregistreur de carte (21), comprenant des moyens pour lire et écrire des données dans une carte à circuit intégré, et des moyens pour lire des pistes magnétiques qui sont formées sur une carte magnétique ;
des moyens de traitement de données (10) pour exécuter un traitement prédéterminé sur la base des données de carte et d'une information qui est lue dans les moyens d'enregistrement (22b) de la cartouche de programme (22) ;
des moyens de montage de cartouche de programme (72) pour recevoir de façon amovible les moyens de connexion (23) d'une cartouche de programme (22) et d'au moins une cartouche de programme supplémentaire ;
des moyens pour déterminer si une cartouche de programme (22) correspondant aux données lues dans la carte à circuit intégré sont présentes dans l'appareil de traitement de transactions par carte ;
des moyens pour transférer le programme de transaction enregistré dans la cartouche de programme vers la mémoire vive de l'appareil de traitement de transactions par carte, si une cartouche de programme (22) correspondant aux données qui sont lues sur la carte à circuit intégré est présente ;
des moyens pour traiter une transaction financière sur la base des données de carte et de l'information qui est lue dans les moyens d'enregistrement (22b) de la cartouche de programme ; et
des moyens pour exécuter un traitement d'erreur si la détermination qui est faite indique qu'une cartouche de programme correspondant aux données qui sont lues sur la carte à circuit intégré n'est pas présente dans l'appareil de traitement de transactions par carte.

2. Un appareil de traitement de transactions par carte (1) selon la revendication 1, CARACTERISE EN CE QUE les moyens d'enregistrement (22b) enregistrent :
des données de protocole de carte (30) représentatives d'un format dans lequel des données sont enregistrées dans la carte ;
un numéro de terminal (31) pour identifier l'appareil de traitement de transactions par carte (1) ;
un code de firme (32) représentatif d'une firme qui a émis la carte ;
des données de limite supérieure (33) représentatives d'une limite supérieure de crédit disponible avec la carte ;
des données de numéro d'appel pour une connexion (34) représentatives d'un numéro d'accès pour connecter l'appareil de traitement de transactions par carte (1) à un équipement central (15) ;
un programme d'application de sélection de procédure de transaction (35) qui comprend un programme et des données pour exécuter un traitement de transaction ; et
des paramètres de commande de communication (36) qui sont nécessaires à l'appareil de traitement de transactions par carte (1) pour communiquer avec l'équipement central (15).

3. Un appareil de traitement de transactions par carte selon la revendication 1, CARACTERISE EN CE QUE les moyens de traitement de données (10) comprennent en outre des moyens pour sélectionner une cartouche de programme parmi la cartouche de programme précitée et la ou les cartouches de programme supplémentaires, après que les données de carte ont été lues par le lecteur/enregistreur de carte (21), et pour exécuter un traitement de transaction sur la base d'un programme ou de données de transaction qui sont enregistrés dans la cartouche de programme sélectionnée.

4. Un appareil de traitement de transactions par carte selon la revendication 1, CARACTERISE EN CE QUE lorsqu'une carte à circuit intégré est lue par le lecteur/enregistreur de carte (21), les moyens de traitement de données (10) émettent un signal de restauration vers la carte, et la carte réagit en retournant un signal de réponse à restauration aux moyens de traitement de données (10), et le signal de réponse à restauration comprend :
des premiers caractères (40) identifiant le bit de plus fort poids et le bit de moindre poids ;
des seconds caractères (42) représentatifs d'une horloge de fonctionnement et d'une tension de fonctionnement de la carte ; et
des troisièmes caractères (41) représentatifs d'un format dans lequel les seconds caractères (42) sont enregistrés.

5. Un appareil de traitement de transactions par carte selon la revendication 1, CARACTERISE EN CE QUE la clé de mémoire et la clé de fichier sont enregistrées dans la seconde section de mémoire et elles sont transférées vers l'appareil de traitement de transactions par carte (1).

6. Un appareil de traitement de transactions par carte selon la revendication 1, CARACTERISE EN CE QUE cet appareil de traitement de transactions par carte (1) comprend en outre des moyens de réception de clé, comprenant un clavier (2) et une unité de commande de communication, et connectés aux moyens de traitement de données (10), pour recevoir la clé de mémoire et la clé de fichier, la clé étant introduite manuellement au moyen du clavier (2), et les clés étant reçues à partir de l'équipement central (15) par l'intermédiaire de l'unité de commande de communication (13).

7. Un appareil de traitement de transactions par carte selon la revendication 1, CARACTERISE EN CE QUE les moyens de traitement de données (10) comprennent en outre des moyens pour transférer la clé de mémoire vers la cartouche de programme (22) par l'intermédiaire des moyens de connexion (23), et les moyens de commande (22a) de la cartouche de programme (22) comprennent en outre des moyens pour déterminer si la clé de mémoire qui est transférée vers la cartouche de programme (22) est correcte, pour autoriser l'accès à la première section de mémoire de la cartouche de programme (22) si la clé de mémoire qui est transférée vers la cartouche de programme (22) est correcte, et pour signaler aux moyens de traitement de données (10) de l'appareil de traitement de transactions par carte (1), par l'intermédiaire des moyens de connexion (23), si la clé de mémoire qui est transférée vers la cartouche de programme (22) est correcte.

8. Un appareil de traitement de transactions par carte selon la revendication 1, CARACTERISE EN CE QUE les moyens de traitement de données (10) comprennent en outre des moyens pour transférer la clé de fichier vers la cartouche de programme (22), par l'intermédiaire des moyens de connexion, si la clé de mémoire qui est transférée vers la cartouche de programme (22) est correcte, et les moyens de commande (22a) de la cartouche de programme (22) comprennent en outre des moyens pour déterminer si la clé de fichier qui est transférée vers la cartouche de programme (22) est correcte, pour autoriser l'accès au fichier si la clé de fichier qui est transférée vers la cartouche de programme (22) est correcte, et pour signaler aux moyens de traitement de données (10) de l'appareil de traitement de transactions par carte (1), par l'intermédiaire des moyens de connexion (23), si la clé de fichier qui est transférée vers la cartouche de programme (22) est correcte.

9. Un appareil de traitement de transactions par carte selon la revendication 1, CARACTERISE EN CE QUE cet appareil de traitement de transactions par carte (1) comprend en outre une mémoire dans laquelle le fichier est lu, par l'intermédiaire des moyens de connexion (23), si la clé de fichier qui est transférée vers la cartouche de programme (22) est correcte.

10. Un procédé pour traiter des transactions financières en utilisant un appareil de traitement de transactions par carte qui reçoit des cartes enregistrant de l'information, et qui comprend une mémoire vive et au moins une cartouche de programme échangeable,
le procédé comprenant les étapes suivantes :
(a) la mise en fonction de l'appareil de traitement de transactions par carte ;
(b) l'initialisation de l'appareil de traitement de transactions par carte, par l'accomplissement d'au moins une opération d'initialisation prédéterminée sur l'appareil de traitement de transactions par carte, le fonctionnement de l'appareil de traitement de transactions par carte étant empêché jusqu'à l'accomplissement de l'opération, ou des opérations, d'initialisation prédéterminées ;
(c) l'introduction d'une carte de client dans l'appareil de traitement de transactions par carte, après l'étape (b) ;
(d) la lecture de l'information présente sur la carte de client, l'information qui est lue sur la carte de client comprenant un protocole pour la communication avec un équipement central disposé à un emplacement éloigné ;
(e) la détermination du fait qu'une cartouche de programme correspondant au protocole qui est lu à l'étape (d) est présente ou non dans l'appareil de traitement de transactions par carte ;
(f) si la détermination qui est faite indique qu'une cartouche de programme correspondant au protocole qui est lu à l'étape (d) est présente dans l'appareil de traitement de transactions par carte, le transfert d'un programme enregistré dans la cartouche de programme respective de l'appareil vers la mémoire vive de l'appareil de traitement de transactions par carte ;
(g) le traitement d'une transaction financière, l'étape (g) comprenant l'exécution du programme qui est transféré à l'étape (f), et la transmission d'information entre l'appareil de traitement de transactions par carte et l'équipement central ; et
(h) l'exécution d'un traitement d'erreur si la détermination qui est faite indique qu'une cartouche de programme correspondant au protocole qui est lu à l'étape (d) n'est pas présente dans l'appareil de traitement de transactions par carte.

11. Le procédé de la revendication 10, CARACTERISE EN CE QUE le programme qui est transféré à l'étape (f) est enregistré dans un fichier parmi un ensemble de fichiers dans la cartouche de programme respective, la cartouche de programme respective enregistrant en outre une clé de verrou de mémoire et une clé de verrou de fichier, et en ce que l'étape (f) comprend les étapes suivantes :
le transfert d'une clé de mémoire proposée vers la cartouche de programme respective ;
dans la cartouche de programme respective, la comparaison de la clé de mémoire proposée avec la clé de mémoire qui est enregistrée dans la cartouche de programme respective ;
l'interdiction à l'appareil de traitement de transactions de carte d'accéder à un fichier quelconque parmi un ensemble de fichiers dans la cartouche de programme respective, si la clé de mémoire proposée ne concorde pas avec la clé de mémoire qui est enregistrée dans la cartouche de programme ;
l'émission d'un signal d'état d'accord à partir de la cartouche de programme respective si la clé de mémoire proposée concorde avec la clé de mémoire qui est enregistrée dans la cartouche de programme respective ;
si le signal d'état d'accord est émis, le transfert d'une clé de fichier proposée vers la cartouche de programme respective ;
dans la cartouche de programme respective, la comparaison de la clé de fichier proposée avec la clé de fichier qui est enregistrée dans la cartouche de mémoire respective ; et
l'interdiction à l'appareil de traitement de transactions par carte d'accéder au fichier prédéterminé parmi un ensemble de fichiers, si la clé de fichier proposée ne concorde pas avec la clé de fichier.

12. Procédé selon la revendication 10, CARACTERISE EN CE QUE l'opération ou les opérations d'initialisation prédéterminées qui sont effectuées à l'étape (b) comprennent les étapes qui consistent à introduire une carte d'autorisation dans l'appareil de traitement de transactions par carte, et à introduire en outre un code prédéterminé par l'intermédiaire d'un clavier de l'appareil.

13. Le procédé de la revendication 10, CARACTERISE EN CE QUE ce procédé comprend en outre l'étape qui consiste à actionner le clavier pour sélectionner une transaction de crédit ou une transaction de débit avant l'accomplissement de l'étape (d).

14. Le procédé de la revendication 10, CARACTERISE EN CE QUE l'étape (d) comprend la lecture d'au moins une piste magnétique sur une carte à circuit intégré, et comprend en outre la transmission d'un signal de réponse à restauration, de la carte de client vers l'appareil de traitement de transactions par carte, après l'accomplissement de l'étape (d).

15. Le procédé de la revendication 10, CARACTERISE EN CE QUE la cartouche ou chaque cartouche de programme qui est incluse dans l'appareil de traitement de transactions par carte comprend au moins une première cartouche de programme correspondant à un premier protocole, et une seconde cartouche de programme correspondant à un second protocole, et en ce que l'étape (e) comprend l'opération qui consiste à déterminer si le protocole qui est lu à l'étape (d) est le premier protocole et, dans la négative, s'il est le second protocole.

16. Le procédé de la revendication 10, CARACTERISE EN CE QUE au moins une cartouche de programme supplémentaire, correspondant à au moins un protocole supplémentaire, est incluse dans l'appareil de traitement de transactions par carte, et en ce que l'étape (e) comprend en outre l'opération consistant à déterminer si le protocole qui est lu à l'étape (d) est le protocole supplémentaire, ou l'un d'eux.
